# EUROPÄISCHE PATENTANMELDUNG

(11) **EP 0 954 087 A1**
(43) Veröffentlichungstag der Anmeldung: **03.11.1999**
(21) Anmeldenummer: 98810391.7
(22) Anmeldetag: 30.04.1998
(51) Int. Cl.: H02K 51/00

(54) **Elektrodynamisches Getriebe und Kreiselpumpe mit einem derartigen Getriebe**

(71) Anmelder: SULZER INNOTEC AG, CH-8401 Winterthur (CH)
(72) Erfinder: Kläui, Erich, 8472 Seuzach (CH)
(74) Vertreter: Sulzer Management AG

(57) **Zusammenfassung**

Das Getriebe umfasst mindestens drei Induktionssysteme (1, 2, 3), die axial hintereinander oder koaxial übereinander angeordnet und um eine gemeinsame Drehachse (4) drehbar sind. Das mittlere Induktionssystem (3; 13) ist in den Seitenflächen jeweils mit einer Wicklung (5, 6) versehen, die miteinander verbunden und so ausgebildet sind, dass die mittels Relativbewegung zwischen dem mittleren Induktionssystem (3; 13) und einem benachbarten Induktionssystem (1, 11; 2, 12) in den Wicklungen auftretenden magnetischen Drehfelder eine Relativbewegung zwischen dem mittleren und dem anderen benachbarten Induktionssystem bewirken, um eine Abtriebsbewegung zu erzeugen.

## Beschreibung

Die Erfindung betrifft ein elektrodynamisches Getriebe und eine Kreiselpumpe mit einem derartigen Getriebe.

Der Erfindung liegt die Aufgabe zugrunde, ein elektrodynamisches Getriebe zu schaffen, das einfach aufgebaut ist.

Diese Aufgabe wird erfindungsgemäss durch die Merkmale des Anspruches 1 gelöst.

Die mit der Erfindung erzielbaren Vorteile sind im wesentlichen darin zu sehen, dass keine äussere elektrische Hilfs- oder Steuerenergie benötigt wird und dass das Getriebe auf verschiedene Arten betrieben werden kann.

Vorteilhafte Ausführungen der Erfindung ergeben sich aus den abhängigen Ansprüchen.

Im folgenden wird die Erfindung anhand der beiliegenden Zeichnungen erläutert.

Es zeigen:
- Fig. 1: Eine Ansicht einer Ausführung eines erfindungsgemässen Getriebes;
- Fig. 2: einen Schnitt entlang der Linie II-II in Fig. 1;
- Fig. 3: einen Querschnitt einer anderen Ausführungsform des erfindungsgemässen Getriebes;
- Fig. 4: einen Teilschnitt einer Ausführung einer erfindungsgemässen Kreiselpumpe und
- Fig. 5: einen Teilschnitt einer anderen Ausführung einer erfindungsgemässen Kreiselpumpe.

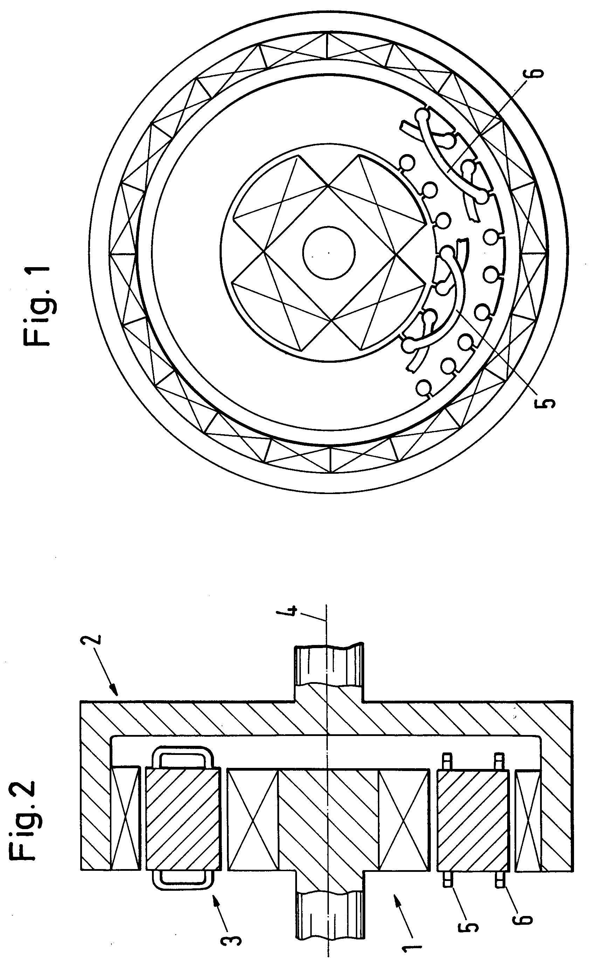

Wie die Figuren 1 und 2 zeigen enthält das elektromagnetische Getriebe ein inneres Polrad 1, ein äusseres Polrad 2 und einen Zwischenanker 3, die eine gemeinsame Drehachse 4 haben. Das innere Polrad 1 ist nach Art eines permanentmagnetischen Polrades für Synchronmaschinen ausgebildet und weist p1 Polpaare auf. Das äussere Polrad 2 ist in der Art eines permanentmagnetischen Aussenläufers für eine Synchronmaschine ausgebildet und weist p2 Polpaare auf. Das äussere Polrad 2 umgibt den Zwischenanker 3. Der Zwischenanker 3 ist ringförmig ausgebildet und umschliesst das innere Polrad 1. Der Zwischenanker 3 besteht aus ferromagnetischem Material. Am inneren und äusseren Umfang des Zwischenankers 3 sind eine erste und zweite mehrphasige Wicklungen 5, 6 angeordnet. Die erste Wicklung 5 weist eine Polzahl p1 und die zweite Wicklung 6 eine Polzahl p2 auf. Die Wicklungen 5, 6 sind so ausgebildet, dass ein auf die eine Wicklung einwirkendes magnetisches Drehfeld in der anderen Wicklung ein magnetisches Drehfeld erzeugt.

Es wird darauf hingewiesen, dass anstelle der permanentmagnetischen Polräder auch Anker mit einer mehrphasigen Wechselstromwicklung, z.B. eine kurzgeschlossene Käfigläuferwicklung verwendet werden können. Ebenso ist es möglich, diese Wechselstromwicklung in einer Ringwicklung oder Scheibenwicklung anzuordnen.

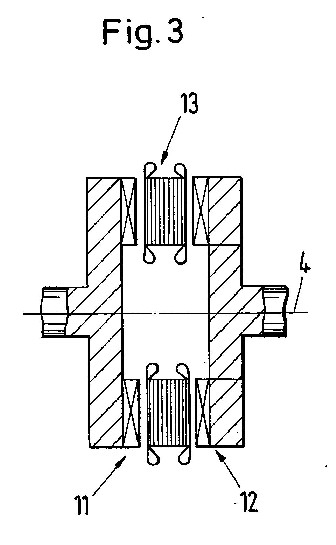

Die Fig. 3 zeigt eine Ausführung, welche scheibenförmige Polräder 11, 12 und einen ringförmigen Zwischenanker 13 enthält, die eine gemeinsame Drehachse haben.

Es wird angenommen, dass die Polräder 1, 2; 11, 12 drehbar sind und der Zwischenanker 3; 13 ortsfest angeordnet ist. Durch das Antreiben des inneren Polrades 1 resultiert eine Relativbewegung zwischen dem Polrad und dem Zwischenanker. Dadurch werden in der ersten Wicklung 5 des Zwischenankers 3 elektrische Ströme induziert. Diese erzeugen in der zweiten Wicklung 6 ein Drehfeld. Dieses Drehfeld verursacht seinerseits eine Relativbewegung zwischen dem Zwischenanker 3; 13 und dem äusseren Polrad 2; 12, so dass das äussere Polrad rotiert.

Durch die Auswahl der Polpaare p1 und p2 und die Ausbildung der Wickelköpfe zwischen der ersten und zweiten Wicklung können das Verhältnis der Relativgeschwindigkeiten und die Umlaufrichtung und damit das Uebersetzungsverhältnis des Getriebes bestimmt werden. Das Getriebe kann auf unterschiedliche Weise betrieben werden, je nachdem welches der Getriebeglieder 1, 2, 3; 11, 12, 13 ortsfest angeordnet ist und welches mechanisch angetrieben wird. Wird der Zwischenanker 3, 12 angetrieben, so ergibt sich ein Getrieb mit zwei Abtriebsdrehzahlen.

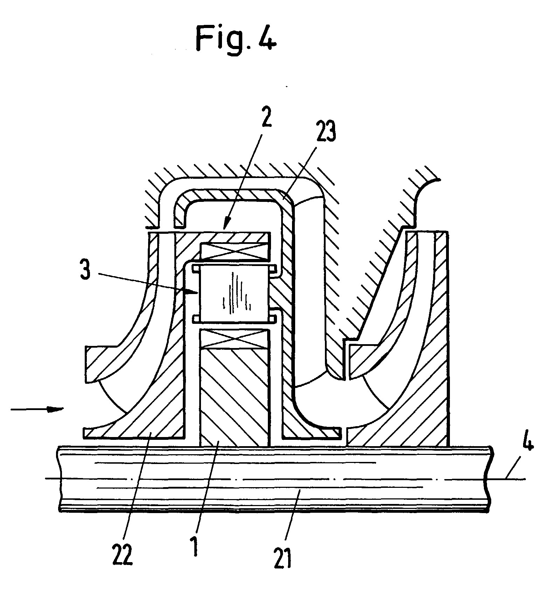

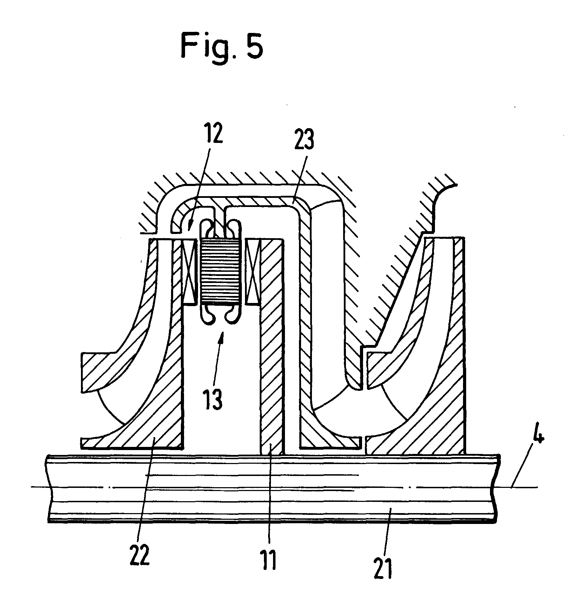

Aus den Figuren 4 und 5 ist die Anwendung der vorstehend beschriebenen elektrodynamischen Getriebe bei einer Kreiselpumpe ersichtlich. Mehrstufige Kreiselpumpen benötigen einen relativ hohen Zulaufdruck am Eintritt der ersten Stufe, um Kavitation in dieser zu vermeiden. Hierzu können Zubringerpumpen oder spezielle Saugräder in verschiedenen Ausführungen angewendet, die mittels mechanischer Umwandler, z.B. ein Planetengetriebe angetrieben werden.

Wie die Fig. 4 zeigt, ist das innere Polrad 1 auf der Pumpenwelle 21 befestigt. Das äussere Polrad 2 ist im Laufrad 22 angeordnet und der Zwischenanker 3 ist im Pumpengehäuse 23 befestigt.

Bei der Ausführung gemäss Fig. 5 ist das innere Polrad 11 auf der Pumpenwelle 21 befestigt und das äussere Polrad 12 ist am Laufrad 22 angeordnet. Der Zwischenanker 13 ist am Pumpengehäuse 23 montiert.

Das Getriebe umfasst mindestens drei Induktionssysteme 1, 2, 3, die axial hintereinander oder koaxial übereinander angeordnet und um eine gemeinsame Drehachse 4 drehbar sind. Das mittlere Induktionssystem 3; 13 ist in den Seitenflächen jeweils mit einer Wicklung 5, 6 versehen, die miteinander verbunden und so ausgebildet sind, dass die mittels Relativbewegung zwischen dem mittleren Induktionssystem 3; 13 und einem benachbarten Induktionssystem 1, 11; 2, 12 in den Wicklungen auftretenden magnetischen Drehfelder eine Relativbewegung zwischen dem mittleren und dem anderen benachbarten Induktionssystem bewirken, um eine Abtriebsbewegung zu erzeugen.

## Patentansprüche

1. Dynamoelektrisches Getriebe, dadurch gekennzeichnet, dass mindestens drei Induktionssysteme (1, 2, 3; 11, 12, 13) axial hintereinander oder koaxial übereinander angeordnet und um eine gemeinsame Drehachse (4) drehbar sind und dass das mittlere Induktionssystem (3; 13) in der den anderen Induktionssysteme zugewandten Seiten jeweils mit einer Wicklung (5, 6) versehen ist, die miteinander verbunden und so ausgebildet sind, dass die mittels Relativbewegung zwischen dem mittleren Induktionssystem (3; 13) und einem benachbarten Induktionssystem (1, 11; 2, 12) in den Wicklungen auftretenden magnetischen Drehfelder eine Relativbewegung zwischen dem mittleren und dem anderen benachbarten Induktionssystem bewirken, um eine Abtriebsbewegung zu erzeugen.

2. Getriebe nach Anspruch 1, dadurch gekennzeichnet, dass die Induktionssysteme ringförmig oder scheibenförmig ausgebildet sind.

3. Getriebe nach einem der Ansprüche 1 oder 2, dadurch gekennzeichnet, dass die zum mittleren Induktionssystem (3, 13) benachbarten Induktionssysteme eine Wicklung und/oder Permanentmagnete enthalten.

4. Getriebe nach Anspruch 3, gekennzeichnet durch eine Wicklung ausgewählt aus der Gruppe Gleichstromwicklung, ein- oder mehrphasige Wechselstromwicklung, Käfigwicklung oder dgl..

5. Getriebe nach Anspruch 3, dadurch gekennzeichnet, dass die Permanentmagnete in den den magnetischen Fluss leitende Mittel angeordnet sind und dass die zum mittleren, benachbarten Induktionssysteme als Polräder ausgebildet sind.

6. Getriebe nach Anspruch 1, dadurch gekennzeichnet, dass die Wicklungen (5, 6) der Induktionssysteme ein- oder mehrphasige Wechselstromwicklungen sind, deren Phasenzahlen kompatibel und deren Polzahlen gleich oder unterschiedlich sind.

7. Getriebe nach Anspruch 1, dadurch gekennzeichnet, dass die Wicklungen (5, 6) des mittleren Induktionssystems (3; 13) so verbunden sind, dass die magnetischen Drehfelder gleich oder gegenläufig sind.

8. Getriebe nach Anspruch 1, dadurch gekennzeichnet, dass die zu den Wicklungen des mittleren Induktionssystems (3; 13) benachbarten anderen Induktionssysteme jeweils die gleiche Polzahl aufweisen.

9. Getriebe nach Anspruch 1, dadurch gekennzeichnet, dass die Wicklungen auch als Ringwicklung ausgebildet sein können.

10. Getriebe nach Anspruch 1, dadurch gekennzeichnet, dass die Wicklungen nur aus einem Leiter pro Spulenseite bestehen.

11. Getriebe nach Anspruch 10, dadurch gekennzeichnet, dass der Leiter aus verschränkten Teilleitern besteht.

12. Getriebe nach Anspruch 1, dadurch gekennzeichnet, dass das mittlere Induktionssystem (3; 13) einen Kern aufweist, ausgewählt aus der Gruppe geschichtetes Blech, gewickelter Profildraht, Pulververbundstoff, Ferrit, welche aus ferromagnetischem Material bestehen.

13. Getriebe nach einem der Ansprüche 1 bis 12, dadurch gekennzeichnet, dass die Induktionssysteme als Antriebselement oder Abtriebselement auswählbar sind.

14. Getriebe nach einem der Ansprüche 1 bis 13, dadurch gekennzeichnet, dass ein Induktionssystem ortsfest angeordnet ist und dass die anderen Induktionssysteme als Antriebselement oder Abtriebselement auswählbar sind.

15. Kreiselpumpe mit einem Getriebe nach einem der Ansprüche 1 bis 14, dadurch gekennzeichnet, dass die Induktionssysteme koaxial angeordnet sind, dass das mittlere Induktionssystem ortsfest angeordnet ist und dass das innere oder äussere Induktionssystem als Antriebselement vorgesehen ist.

16. Kreiselpumpe mit einem Getriebe nach einem der Ansprüche 1 bis 14, dadurch gekennzeichnet, dass die Induktionssysteme koaxial angeordnet sind, dass das äussere oder innere Induktionssystem ortsfest angeordnet ist und dass das mittlere oder das benachbarte bewegliche Induktionssystem als Antriebselement vorgesehen ist.

17. Kreiselpumpe mit einem Getriebe nach einem der Ansprüche 1 bis 14, dadurch gekennzeichnet, dass die Induktionssysteme axial hintereinander angeordnet sind, dass das mittlere Induktionssystem ortsfest angeordnet ist und dass eines der äusseren Induktionssysteme als Antriebselement vorgesehen ist.

18. Kreiselpumpe mit einem Getriebe nach einem der Ansprüche 1 bis 14, dadurch gekennzeichnet, dass die Induktionssysteme axial hintereinander angeordnet sind, dass eines der äusseren Induktionssysteme ortsfest angeordent ist und entweder das mittlere oder das benachbarte bewegliche Induktionssystem als Antriebselement vorgesehen ist.
